# EUROPEAN PATENT SPECIFICATION

(11) **EP 4 193 134 B1**
(45) Date of publication and mention of the grant of the patent: **01.05.2024**
(21) Application number: 21765968.9
(22) Date of filing: 09.08.2021
(51) Int. Cl.: G01L 1/18, G01L 1/20

(54) **FORCE SENSING DEVICE**
KRAFTMESSVORRICHTUNG
DISPOSITIF DE DÉTECTION DE FORCE

(30) Priority: 10.08.2020 GB 202012388
(43) Date of publication of application: 14.06.2023
(73) Proprietor: Peratech Holdco Ltd, Catterick Garrison, North Yorkshire DL9 4QJ (GB)
(72) Inventor: LOLACHI, Ramin, Belmont DH1 1AQ (GB)
(74) Representative: Atkinson & Company Intellectual Property Limited
(86) International application number: PCT/GB2021/000089
(87) International publication number: WO 2022/034277

(56) References cited:
- WO-A1-2019/222969
- WO-A1-2020/234197
- CN-A- 109 115 376
- GB-A- 2 584 088
- US-A1- 2014 076 063
- US-A1- 2020 035 388

## Description

### BACKGROUND OF THE INVENTION

The present invention relates to a force sensing device, a method of manufacturing the force sensing device and a method of testing the force sensing device.

Conventional force sensing devices comprising first and second conductive layers and a third, active pressure sensitive layer, which are responsive to mechanical interactions such as a force or pressure applied are known in the art. In real-world applications, the typical area-force response to a mechanical interaction has limited dynamic range of force sensitivity compared to the dynamic range measured under laboratory conditions. In the latter case, the dynamic response provides a smooth increase in contact area with increase in force leading to increased sensitivity.

An example of a conventional force sensing device is found in US 2020/035388 A1 (ROBERTS JASON [GB] ET AL) which describes a force sensitive resistor having first and second electrical contacts which are spaced apart from one another with a layer of deformable material between the two contacts.

US 2014/076063 A1 (LISSEMAN JASON [US] ET AL) describes a sensor comprising a substrate, conductive elements and an electroactive layer. The electroactive layer defines an electrical property which is configured to vary in relation to a magnitude of pressure. It is desirable to improve the pressure sensitivity of current force sensing devices by improving the dynamic response.

CN 109 115 376 A (GRADUATE SCHOOL SHENZHEN TSINGHUA UNIV) discloses a capacitive flexible pressure sensor comprising a polymer elastomer electrode, an insulating layer film and an ITO electrode. The sensor includes a micro structured array comprising micro structured protrusions.

WO 2019/222969 A1 (SHENZHEN INST ADV TECH [CN]) describes a further flexible pressure sensor based on a hemispheric microstructure aimed at improving the measurement range and sensitivity of the pressure sensor.

### BRIEF SUMMARY OF THE INVENTION

According to a first aspect of the present invention, there is provided a force sensing device, as claimed in claim 1.

According to a second aspect of the present invention, there is provided a method of testing a force sensing device, as claimed in claim 9.

According to a third aspect of the present invention, there is provided a method of manufacturing a force sensing device, as claimed in claim 10.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art. Components and processes distinguished by ordinal phrases such as "first" and "second" do not necessarily define an order or ranking of any sort.

### BRIEF DESCRIPTION OF THE SEVERAL VIEWS OF THE DRAWINGS

Figure 1 shows an exploded schematic view of a force sensing device;
Figure 2 shows a schematic side view of the force sensing device of Figure 1;
Figure 3 shows a method of testing the force sensing device shown in Figures 1 and 2 by means of an elastic actuator;
Figure 4 shows the application of a distributed force by means of the elastic actuator of Figure 3;
Figure 5 shows an alternative force sensing device in a method of testing utilising a hemispherical probe;
Figure 6 shows a substantially similar force sensing device to the force sensing device of Figure 5 in a method of testing utilising an elastic actuator;
Figure 7 shows an area-force curve illustrating the different dynamic responses of the embodiments shown in Figures 4,5 and 6; and
Figure 8 shows a logarithmic area-force curve corresponding to the embodiments of Figures 4,5 and 6.

### DETAILED DESCRIPTION OF EMBODIMENTS OF THE INVENTION

### Figure 1

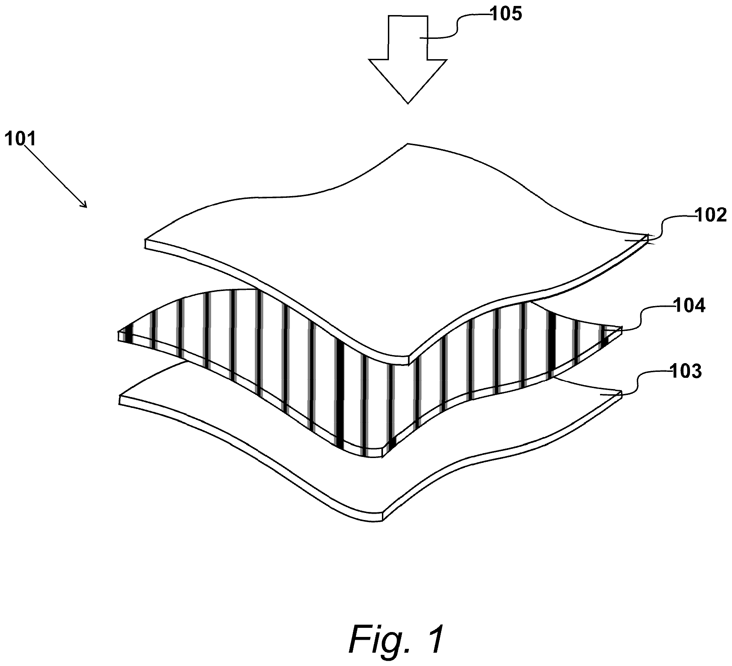

A force sensing device **101** comprises a first conductive layer **102** and a second conductive layer **103.** Force sensing device **101** is further provided with a pressure sensitive active layer **104** which is responsive to a mechanical interaction and is positioned between conductive layer **102** and conductive layer **103.** In Figure 1, force sensing device **101** is shown in a schematic exploded view for illustrative purposes.

In the embodiment, conductive layer **102** and conductive layer **103** each comprise a conductive material. In an embodiment, the conductive material comprises a metallic material such as silver-based printable ink or a carbon-based material such as a carbon-based printable ink. It is appreciated that, in an embodiment, the metallic materials of the first and second conductive layers may be substantially similar or substantially different.

Pressure sensitive active layer **104** comprises a pressure sensitive material, and in an embodiment, the pressure sensitive material comprises a quantum tunnelling material. In an embodiment the pressure sensitive material comprises a printable ink. Examples of suitable materials can be obtained from the present applicant, Peratech Holdco Limited, Brompton-on-Swale, United Kingdom.

Quantum tunnelling materials of this type are responsive to a mechanical interaction in that, when a force is applied, they exhibit a change in electrical resistance which can be used to measure the nature of the force applied. It is appreciated that other pressure sensitive materials may be utilised which also exhibit a change in resistance on application of an applied force.

In use, the layers of force sensing device **101** are held in close proximity such that, when a mechanical interaction, such as a force or pressure, is applied to, for example, the top surface of conductive layer **102** in the direction of arrow **105,** an electric current is transmitted through conductive layer **102** and active layer **104** to conductive layer **103.** In the absence of such a mechanical interaction, the conductive layers are held apart by the active layer and an electric current is not transmitted. Thus, when connected to a suitable electric circuit known in the art, the response to the mechanical interaction can be utilised to calculate the magnitude of the mechanical interaction and in some embodiments, the position of the mechanical interaction.

In an embodiment, force sensing device **101** is typically formed as a force sensing device having a substantially circular cross-section when viewed from above. However, it is appreciated that, in alternative embodiments, force sensing device **101,** may comprise an alternative cross-sectional area, such as a substantially square-shaped cross-sectional area. Pressure sensitive active layer **104** may comprise a plurality of force sensing elements, thereby enabling the magnitude of an applied force in the direction of arrow **105** to be calculated.

The dynamic range of force sensitivity of conventional force sensing devices of this type is in part dependent on a smooth increase in contact area between conductive layer **102** and conductive layer **103** with increase in force or pressure applied. Thus, the present invention aims to adapt these layers compared to conventional force sensing devices so as to optimise the increase in contact area between first and second conductive layers **102** and **103,** thereby improving the dynamic range.

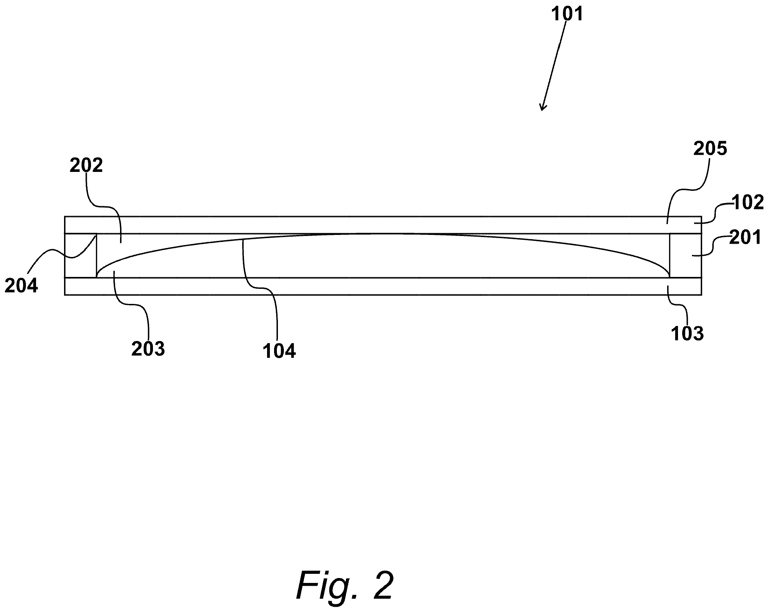

Consequently, in the present invention, force sensing device **101** further comprises a force distribution structure which is configured to extend an applied force across active layer **104,** and expand the contact area between pressure sensitive active layer **104** and conductive layer **102** as will be described in further detail in Figures 2 to 4.

### Figure 2

A further schematic side view of force sensing device **101** is shown in Figure 2. Force sensing device **101** comprises conductive layer **102** and conductive layer **103** which are spaced apart by spacer gasket **201.** Thus, between conductive layer **102** and conductive layer **103** is air gap **202** which maintains a space between conductive layer **102** and conductive layer **103.**

Positioned between conductive layer **102** and conductive layer **103** is pressure sensitive active layer **104** and a force distribution structure **203** configured to extend a force applied across pressure sensitive active layer **104.** Force distribution structure **203** is configured to expand the contact area between pressure sensitive active layer **104** and conductive layer **102** in response to a force, such as force **105,** being applied to the force sensing device **101.**

In the embodiment, force distribution structure **203** is not only positioned between conductive layer **102** and conductive layer **103,** but also extends between a first end **204** and a second end **205** of conductive layer **102** thereby permitting expansion of the force and increasing across the whole of the layer and increasing the contact area between the conductive layer **102** and pressure sensitive active layer **104.**

The embodiment of Figure 2 shows the force sensing device **101** in an uncompressed state in which a force or pressure has not been applied. Thus, force distribution structure **203** is retained between the two conductive layers in a rest configuration.

In the embodiment, force distribution structure comprises a substantially dome-shaped cross-section as shown. It is appreciated that alternative cross-sections may be utilised that also allow for an applied force to be extended across pressure sensitive active layer **104.** Thus, while a three-dimensional dome-shaped hemispherical cross-section is suitable in this case, alternatively dimensioned hemispherical cross-sections may be utilised along with other suitable shapes.

In addition, the force distribution structure **203** is axially symmetrical about a centre axis. Force distribution structure **203** also comprises a substantially rigid material.

In the embodiment, pressure sensitive active layer **104** is formed as part of the force distribution structure which comprises a pressure sensitive material applied over a solid three-dimensional structure. The pressure sensitive material may be applied to an upper surface of the force distribution structure **203** to form the pressure sensitive active layer **104.** Thus, in this way, the pressure sensitive material may be printed over the substantially rigid material of force distribution structure **203.**

In an alternative embodiment, force distribution structure **203** itself is comprised of a pressure sensitive material which forms the entire structure. In this embodiment, the force distribution structure **203** may be considered the pressure sensitive active layer **104** such that the force distribution structure can be considered to provide the pressure sensitive active layer.

In an embodiment, the pressure sensitive material comprises a quantum tunnelling material such as that previously identified as available from the present applicant, Peratech Holdco Limited.

In the embodiment, conductive layer **102** and conductive layer **103** each comprise a conductive ink which is printed onto a substrate. In the embodiment, the substrate comprises polyethylene terephthalate (PET).

Thus, in manufacture, a first substrate is provided and a conductive ink is printed onto the first substrate to produce conductive layer **102.** A further substrate is then provided and a conductive ink is printed onto the second substrate to produce conductive layer **103.**

### Figure 3

In use, force sensing device **101** may be activated by the application of an elastic actuator **301** to a top surface **302** of conductive layer **102** to provide a mechanical interaction to force sensing device **101.** This method of testing the force sensing device **101** simulates a pressure or force applied to force sensing device **101** which may take the form of a finger press of a user of a force sensing device or similar in accordance with the present invention.

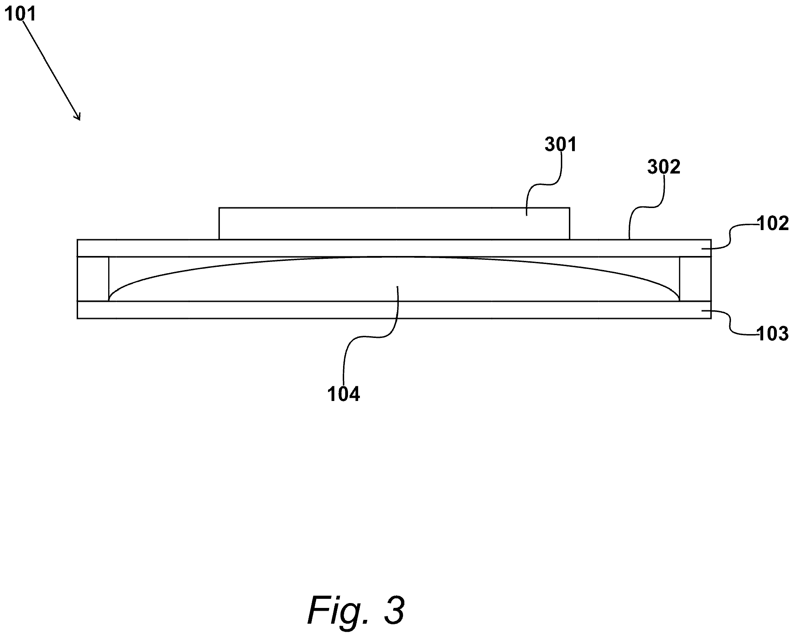

Figure 3 therefore shows the elastic actuator **301** positioned for an application of a force for transmission to force sensing device **101** to conductive layer **102,** pressure sensitive active layer **104** and conductive layer **103.** In this example, force sensing device is shown in an uncompressed state whereby a force is yet to be applied.

### Figure 4

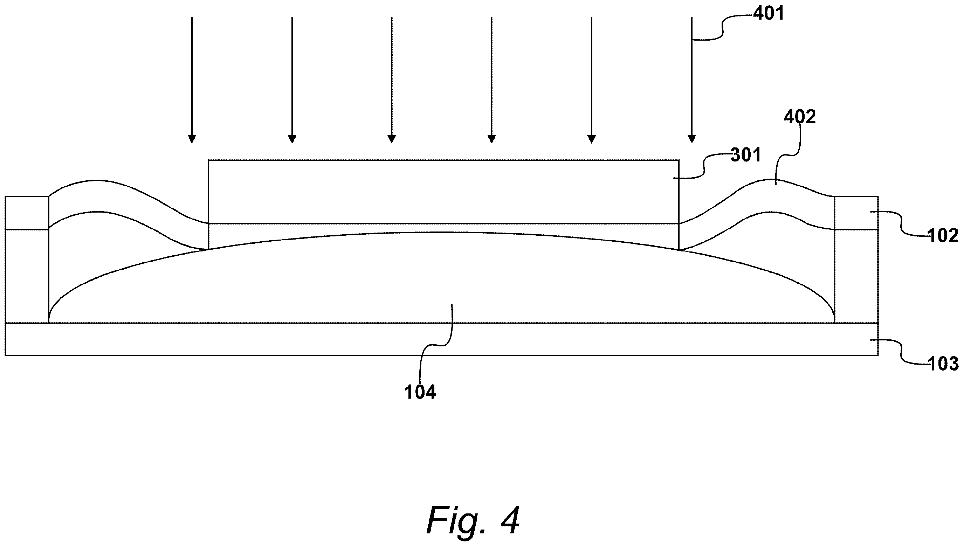

A distributed force **401** is applied by means of elastic actuator **301** as shown in Figure 4 moving the force sensing device form the uncompressed state of Figure 3 to the compressed state of Figure 4.

In the embodiment, a force **401** is uniformly applied to upper surface **402** of conductive layer **102.** This deforms conductive layer **102** which, due to the nature of the force distribution structure **302** is spread across a larger cross-sectional area of conductive layer **102.** As indicated, this deforms conductive layer **102,** however, the application of force is distributed across conductive layer **102** thereby altering the spread of force.

### Figure 5

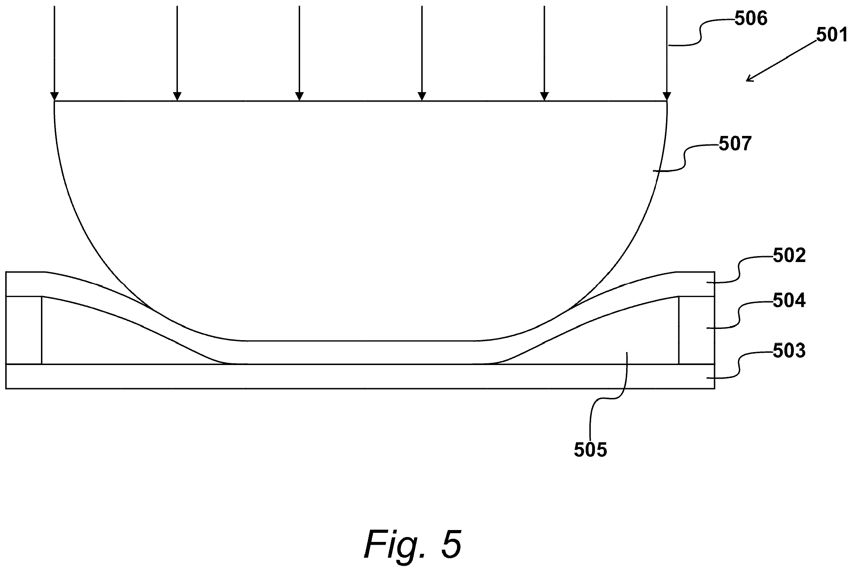

Figure 5 illustrates a typical conventional set-up for a method of testing a force sensing device which typically gives a positive dynamic range for a force sensing device as used in real-world applications. Figure 5 shows a conventional force sensing device **501** comprising conductive layer **502** and conductive layer **503** which are spaced apart by means of a spacer gasket **504.** Spacer gasket **504** separates conductive layers **502** and **503** and creates an air gap **505** therebetween.

A hemispherical probe is shown to illustrate the effects on a force sensing device without a force distribution structure in which a force is applied **506** by means of hemispherical probe **507.** Thus, in this embodiment, force sensing device **501** is shown in a compressed state.

In this embodiment, the deformation of conductive layer **502** brings conductive layer **502** into contact with conductive layer **503** in the manner shown.

### Figure 6

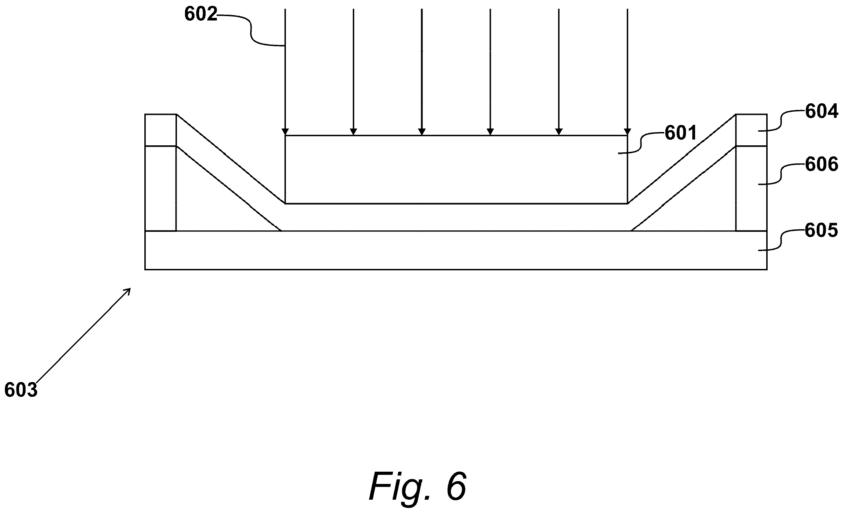

Figure 6 shows a conventional set-up for a method of testing a force sensing device utilising an elastic actuator. Thus, as an alternative to probe **507** which applies distributed force **506,** a flat elastic actuator **601** is utilised to apply distributed force **602.**

Again, the force sensing device **603** comprises a first conductive layer **604** and second conductive layer **605** which are spaced apart by means of a spacer gasket **606.** Force sensing device **603** is shown in a compressed state.

Thus, first conductive layer **604,** in response to a force **602** from actuator **601,** brings conductive layer **604** into contact with conductive layer **605.**

### Figure 7

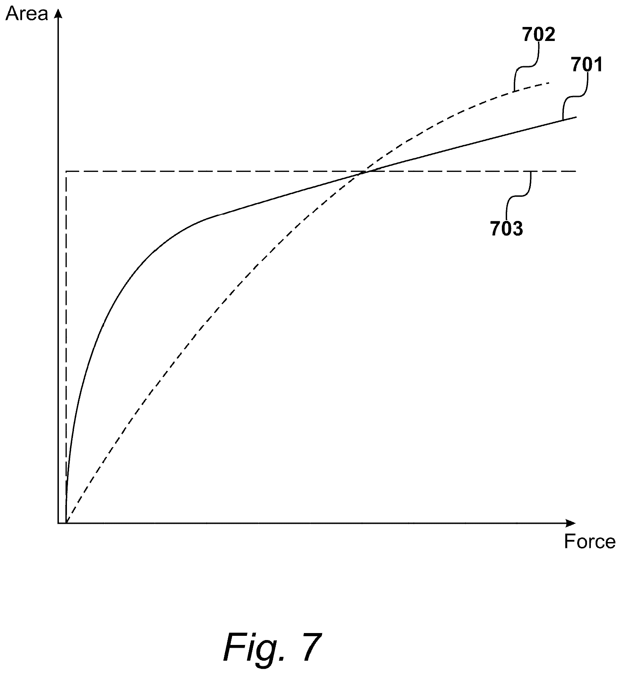

Figure 7 shows an area-force curve illustrating the different dynamic responses of the embodiments shown in Figures 4, 5 and 6. Curve **701** corresponds to the embodiment and present invention of Figure 4. Curve **702** corresponds to the embodiment shown in Figure 5, and curve **703** corresponds to the embodiment shown in Figure 6.

Referring first to curve **702,** which corresponds to the hemispherical probe **507** being used on a force sensing device not comprising a force distribution structure of the present invention. In this embodiment, the area-force response indicates that the contact area increases proportionally to the input force. In this way, as the probe applies a force, the first and second layers make initial contact which gradually expands outwards with deformation of the probe actuator **507.**

In contrast, the response of the embodiment of Figure 6, again for a force sensing device without a force distribution structure and using elastic actuator **601,** indicates that as the actuator applies force **602** first conductive layer and second conductive layer make full contact immediately with no subsequent increase in contact area for further increase in applied force.

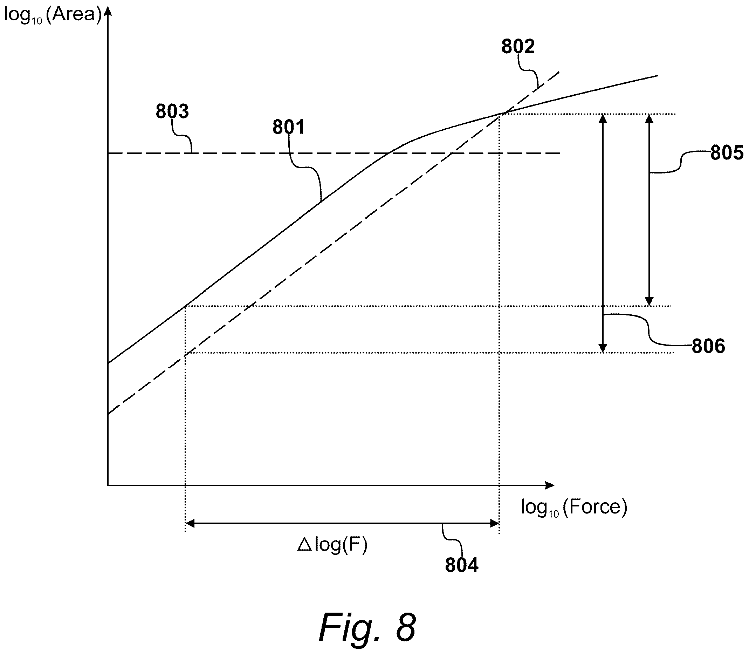

Thus, by including the force distribution structure in the present invention, curve **701** can be produced which indicates a reasonable approximation of the probe response. In this way, as the elastic actuator **301** applies distributed force **401,** the contact expands outwards conforming to force distribution structure **302.** Consequently, the area-force dynamic range corresponds to the size of the increase in area for a given increase in force. This will be illustrated further in the corresponding logarithmic area-force curve in Figure 8.

### Figure 8

A logarithmic (logic) area-force curve is shown in respect of Figure 8. Curve **801** corresponds to the embodiment of Figure 4, curve **802** corresponds to the embodiment of Figure 5 and curve **803** corresponds to the embodiment of Figure 6.

The logarithmic scale illustrates the area-force dynamic range and its relationship to the size of the increase in area for a given increase in force.

An increase in contact area distributed across the conductive layer therefore provides an increase in distributed force. In the case of curve **803,** it can also be noted that there is a zero area-force dynamic range for the example of Figure 6 as the change in area for any given force is zero, as illustrated by the lack of gradient to curve **803.**

In contrast, for an increase in force **804,** curve **801** shows an increase in contact area **805** and curve **802** shows an increase in contact area **806.**

The force sensing device of the present invention therefore provides a force distribution structure within the force sensing device which simulates the force distribution of conventional structures. Thus, even when a conventional elastic actuator is utilised to apply a force across the force sensing device a dynamic range is achieved unlike in conventional procedures as illustrated by the example in Figure 6. This ensures a smooth gradual increase of the effective dynamic range thereby allowing for more sensitive readings to be taken and improve the sensitivity range of the force sensing device.

## Claims

1. A force sensing device (**101**), comprising:
a first upper conductive layer (**102**) and a second lower conductive layer (**103**);
a pressure sensitive active layer (**104**) responsive to a mechanical interaction, said pressure sensitive active layer comprising a pressure sensitive material; and
a force distribution structure (**203**) positioned between said first upper conductive layer and said second lower conductive layer, said force distribution structure extending between a first end (**204**) and a second end (**205**) of said first upper conductive layer; wherein
said force distribution structure is configured to expand the contact area between said pressure sensitive active layer and said first upper conductive layer in response to a force (**105**) being applied to said force sensing device; **characterised in that**:
said pressure sensitive material is applied to an upper surface of said force distribution structure to form said pressure sensitive active layer.

2. The force sensing device of claim 1, wherein said force distribution structure comprises a substantially dome-shaped cross section.

3. The force sensing device of claim 1 or claim 2, wherein said force distribution structure is axially symmetrical.

4. The force sensing device of any one of claims 1 to 3, wherein said pressure sensitive material comprises a quantum tunnelling material.

5. The force sensing device of any one of claims 1 to 4, wherein at least one of said first upper conductive layer and said second lower conductive layer comprises a substrate.

6. The force sensing device of claim 5, wherein said substrate comprises polyethylene terephthalate.

7. The force sensing device of any preceding claim, wherein said first upper and second lower conductive layers are spaced apart by a spacer gasket (**201**).

8. The force sensing device of any preceding claim, wherein said force distribution structure comprises a substantially rigid material.

9. A method of testing a force sensing device, comprising the steps of:
providing the force sensing device of any preceding claim; and
applying an elastic actuator (**301**) to a top surface (**302**) of said first upper conductive layer to provide a mechanical interaction to said force sensing device.

10. A method of manufacturing a force sensing device (**101**) comprising the steps of:
providing a first upper conductive layer (**102**) and a second lower conductive layer (**103**);
providing a pressure sensitive material (**104**) responsive to a mechanical interaction between said first upper conductive layer and said second lower conductive layer; and
positioning a force distribution structure (**203**) between said first upper conductive layer and said second lower conductive layer such that said force distribution structure extends between a first end (**204**) and a second end (**205**) of said first upper conductive layer; **characterised in that**: said step of providing said pressure sensitive material comprises the step of:
applying said pressure sensitive material to an upper surface of said force distribution structure.

11. The method of claim 10, wherein said step of applying said pressure sensitive material comprises printing said pressure sensitive material onto said upper surface of said force distribution structure.

12. The method of claim 10 or claim 11, wherein said force distribution structure comprises a substantially dome-shaped cross section.

13. The method of any one of claims 10 to 12, further comprising the steps of:
providing a first substrate;
printing a conductive ink onto said first substrate to produce said first upper conductive layer;
providing a second substrate; and
printing a conductive ink onto said second substrate to produce said second lower conductive layer.

## Patentansprüche

1. Ein Kraft-Fühlerelement (**101**), umfassend:
Eine erste obere Leitschicht (**102**) und eine zweite untere Leitschicht (**103**);
eine drucksensible Aktivschicht (**104**), die auf eine mechanische Wechselwirkung reagiert, die besagte drucksensible Aktivschicht umfasst ein drucksensibles Material; und
eine kraftverteilende Konstruktion (**203**), zwischen der besagten ersten oberen Leitschicht und der besagten zweiten unteren Leitschicht positioniert, die besagte kraftverteilende Struktur dehnt sich zwischen einer ersten Endung (**204**) und einer zweiten Endung (**205**) der besagten ersten oberen Leitschicht; wobei
die besagte kraftverteilende Konstruktion konfiguriert ist, um die Kontaktfläche zwischen der besagten drucksensiblen Aktivschicht und der besagten ersten oberen Leitschicht als Reaktion auf eine Kraft (**105**), die auf das besagte Kraft-Fühlerelement ausgeübt wird, zu erweitern; **dadurch gekennzeichnet, dass**
das besagte drucksensible Material auf die Oberfläche der besagten kraftverteilenden Konstruktion aufgetragen wird, um die besagte drucksensible Aktivschicht zu erzeugen.

2. Das Kraft-Fühlerelement entsprechend Anspruch 1, wobei die besagte kraftverteilende Konstruktion einen im Wesentlichen kuppelförmigen Querschnitt umfasst.

3. Das Kraft-Fühlerelement entsprechend Anspruch 1 oder Anspruch 2, wobei die besagte kraftverteilende Konstruktion eine Achsensymmetrie aufweist.

4. Das Kraft-Fühlerelement entsprechend jeglicher Ansprüche von 1 bis 3, wobei das besagte drucksensible Material ein quantentunnelfähiges Material umfasst.

5. Das Kraft-Fühlerelement entsprechend jeglicher Ansprüche von 1 bis 4, wobei mindestens eine der beiden besagten ersten oberen Leitschicht und der besagten zweiten unteren Leitschicht ein Trägermaterial umfasst.

6. Das Kraft-Fühlerelement entsprechend Anspruch 5, wobei das besagte Trägermaterial aus Polyethylenterephthalat besteht.

7. Das Kraft-Fühlerelement jeglicher vorangegangener Ansprüche, wobei die besagten ersten oberen und zweiten unteren Leitschichten durch eine Distanzscheibe **(201)** auseinander gehalten werden.

8. Das Kraft-Fühlerelement jeglicher vorangegangener Ansprüche, wobei die besagte kraftverteilende Konstruktion ein im Wesentlichen starres Material umfasst.

9. Ein Verfahren, um ein Kraft-Fühlerelement zu testen, die folgenden Schritte umfassend:
Die Bereitstellung eines Kraft-Fühlerelementes jeglicher vorangegangener Ansprüche; und
die Anwendung eines elastischen Kraftschalters **(301)** auf eine Oberfläche (**302**) der besagten ersten Leitschicht, um die mechanische Wechselwirkung auf das besagte Kraft-Fühlerelement zu liefern.

10. Ein Verfahren zur Herstellung eines Kraft-Fühlerelementes (**101**), die folgenden Schritte umfassend:
Die Bereitstellung einer ersten oberen Leitschicht (**102**) und einer zweiten unteren Leitschicht (**103**);
die Bereitstellung eines drucksensiblen Materials (**104**), das auf eine mechanische Wechselwirkung zwischen der besagten ersten oberen Leitschicht und der besagten zweiten unteren Leitschicht reagiert; und
die Positionierung einer kraftverteilenden Konstruktion (**203**) zwischen der besagten ersten oberen Leitschicht und der besagten zweiten unteren Leitschicht, so dass sich die besagte kraftverteilende Konstruktion zwischen einer ersten Endung (**204**) und einer zweiten Endung (**205**) der besagten ersten oberen Leitschicht dehnt; **dadurch gekennzeichnet, dass** der besagte Schritt der Bereitstellung des besagten drucksensiblen Materials folgenden Schritt umfasst:
Das Auftragen des besagten drucksensiblen Materials auf die Oberfläche der besagten kraftverteilenden Konstruktion.

11. Das Verfahren entsprechend Anspruch 10, wobei der besagte Schritt des Auftragens des besagten drucksensiblen Materials das Aufdrucken des besagten drucksensiblen Materials auf die besagte Oberfläche der besagten kraftverteilenden Konstruktion umfasst.

12. Das Verfahren entsprechend Anspruch 10 oder Anspruch 11, wobei die besagte kraftverteilende Konstruktion einen im Wesentlichen kuppelförmigen Querschnitt umfasst.

13. Das Verfahren jeglicher Ansprüche von 10 bis 12, weiterhin die folgenden Schritte umfassend:
Die Bereitstellung eines ersten Trägermaterials;
das Aufdrucken einer leitfähigen Tinte auf das besagte erste Trägermaterial, um die besagte erste obere Leitschicht zu erzeugen;
die Bereitstellung eines zweiten Trägermaterials; und
das Aufdrucken einer leitfähigen Tinte auf das besagte zweite Trägermaterial, um die besagte zweite untere Leitschicht zu erzeugen.

## Revendications

1. Un dispositif de détection de force (**101**), comprenant :
une première couche conductrice supérieure (**102**) et une seconde couche conductrice inférieure (**103**) ;
une couche active sensible à la pression (**104**) réagissant à une interaction mécanique, ladite couche active sensible à la pression comprenant un matériau sensible à la pression ; et
une structure de répartition de la force (**203**) positionnée entre ladite première couche conductrice supérieure et ladite seconde couche conductrice inférieure, ladite structure de répartition de la force s'étendant entre une première extrémité (**204**) et une seconde extrémité (**205**) de ladite première couche conductrice supérieure ; sachant que
ladite structure de répartition de la force est configurée pour étendre la zone de contact entre ladite couche active sensible à la pression et ladite première couche conductrice supérieure en réaction à l'application d'une force (**105**) sur ledit dispositif de détection de force ; **caractérisé en ce que** :
ledit matériau sensible à la pression est appliqué sur une surface supérieure de ladite structure de répartition de la force pour former ladite couche active sensible à la pression.

2. Le dispositif de détection de force décrit dans la revendication 1, sachant que ladite structure de répartition de la force comprend une section transversale sensiblement conique.

3. Le dispositif de détection de force décrit dans la revendication 1 ou la revendication 2, sachant que ladite structure de répartition de la force est axialement symétrique.

4. Le dispositif de détection de force décrit dans l'une quelconque des revendications 1 à 3, sachant que ledit matériau sensible à la pression comprend un matériau à effet tunnel quantique.

5. Le dispositif de détection de force décrit dans l'une quelconque des revendications 1 à 4, sachant qu'au moins l'une desdites première couche conductrice supérieure ou seconde couche conductrice inférieure comprend un substrat.

6. Le dispositif de détection de force décrit dans la revendication 5, sachant que ledit substrat comprend du polyéthylène téréphtalate.

7. Le dispositif de détection de force décrit dans l'une quelconque des revendications précédentes, sachant que lesdites première couche conductrice supérieure et seconde couche conductrice inférieure sont espacés par un joint d'espacement (**201**).

8. Le dispositif de détection de force décrit dans l'une quelconque des revendications précédentes, sachant que ladite structure de répartition de la force comprend un matériau sensiblement rigide.

9. Un procédé de test d'un dispositif de détection de force, comprenant les étapes suivantes :
la fourniture du dispositif de détection de force décrit dans l'une quelconque des revendications précédentes ; et
l'application d'un actionneur élastique (**301**) sur une surface supérieure (**302**) de ladite première couche conductrice supérieure pour fournir une interaction mécanique sur ledit dispositif de détection de force.

10. Un procédé de fabrication d'un dispositif de détection de force (**101**) comprenant les étapes suivantes :
la fourniture d'une première couche conductrice supérieure (**102**) et d'une seconde couche conductrice inférieure (**103**) ;
la fourniture d'un matériau sensible à la pression (**104**) réagissant à une interaction mécanique entre ladite première couche conductrice supérieure et ladite seconde couche conductrice inférieure ; et
le positionnement d'une structure de répartition de la force (**203**) entre ladite première couche conductrice supérieure et ladite seconde couche conductrice inférieure de telle sorte que la structure de répartition de la force s'étend entre une première extrémité (**204**) et une seconde extrémité (**205**) de ladite première couche conductrice ; **caractérisé en ce que** : ladite étape de fourniture dudit matériau sensible à la pression comprend les étapes suivantes :
l'application dudit matériau sensible à la pression sur une surface supérieure de ladite structure de répartition de la force.

11. Le procédé décrit dans la revendication 10, sachant que ladite étape d'application dudit matériau sensible à la pression comprend l'impression dudit matériau sensible à la pression sur ladite surface supérieure de ladite structure de répartition de la force.

12. Le procédé décrit dans la revendication 10 ou la revendication 11, sachant que ladite structure de répartition de la force comprend une section transversale sensiblement conique.

13. Le procédé décrit dans l'une quelconque des revendications 10 à 12, comprenant en outre les étapes suivantes :
la fourniture d'un premier substrat ;
l'impression d'une encre conductrice sur ledit premier substrat pour produire ladite première couche conductrice supérieure ;
la fourniture d'un second substrat ; et
l'impression d'une encre conductrice sur ledit second substrat pour produire ladite seconde couche conductrice inférieure.
